(19) Europäisches Patentamt
European Patent Office
Office européen des brevets

(11) **EP 2 344 901 B1**

(12) **FASCICULE DE BREVET EUROPEEN**

(45) Date de publication et mention
de la délivrance du brevet:
**27.03.2013 Bulletin 2013/13**

(21) Numéro de dépôt: **09745060.5**

(22) Date de dépôt: **04.11.2009**

(51) Int Cl.:
***G01S 3/14*** *(2006.01)*

(86) Numéro de dépôt international:
**PCT/EP2009/064594**

(87) Numéro de publication internationale:
**WO 2010/052233 (14.05.2010 Gazette 2010/19)**

(54) **PROCEDE DE DETERMINATION DE LA DIRECTION D'ARRIVEE D'UNE ONDE ELECTROMAGNETIQUE**

VERFAHREN ZUR BESTIMMUNG DER ANKUNFTSRICHTUNG EINER ELEKTROMAGNETISCHEN WELLE

METHOD OF DETERMINING THE DIRECTION OF ARRIVAL OF AN ELECTROMAGNETIC WAVE

(84) Etats contractants désignés:
**AT BE BG CH CY CZ DE DK EE ES FI FR GB GR HR HU IE IS IT LI LT LU LV MC MK MT NL NO PL PT RO SE SI SK SM TR**

(30) Priorité: **07.11.2008 FR 0806233**

(43) Date de publication de la demande:
**20.07.2011 Bulletin 2011/29**

(73) Titulaires:
• **THALES**
**92200 Neuilly-sur-Seine (FR)**
• **Merlet, Eric**
**92700 Colombes (FR)**

(72) Inventeurs:
• **MERLET, Eric**
**F-92700 Colombes (FR)**
• **LECCA, Arnaud**
**92704 Colombes Cedex (FR)**
• **MESNAGE, Jean-Christophe**
**F-95300 Pontoise (FR)**
• **ROGIER, Jean-Luc**
**F-95120 Ermont (FR)**

(74) Mandataire: **Lucas, Laurent Jacques et al**
**Marks & Clerk France**
**Conseils en Propriété Industrielle**
**Immeuble Visium**
**22, Avenue Aristide Briand**
**94117 Arcueil Cedex (FR)**

(56) Documents cités:
**FR-A- 2 232 765    GB-A- 1 144 206**
**US-A- 3 300 783**

**Description**

La présente invention concerne un procédé de détermination de la direction d'arrivée d'une onde électromagnétique. Elle s'applique notamment à la détection et la localisation d'émetteurs de signaux électromagnétiques, en particulier dans le domaine naval.

Pour déterminer la direction d'arrivée d'un signal électromagnétique, il est souhaitable que l'antenne utilisée pour capter ledit signal soit grande devant la longueur d'onde du signal. Par exemple, pour un signal HF, la taille de l'antenne devrait pouvoir théoriquement atteindre plusieurs centaines de mètres. Aussi, lorsque la mesure de direction d'arrivée du signal est effectuée à partir d'une plate-forme de taille limitée telle qu'un navire ou une base maritime, l'antenne utilisée est généralement pourvue d'une géométrie particulière permettant de limiter ses dimensions. Le plus souvent, l'antenne comporte un monopôle et deux cadres croisés, ce type d'antenne étant souvent qualifiée « d'antenne Watson-Watt », qualification due à l'algorithme éponyme classiquement utilisé pour déterminer l'angle de gisement d'un signal incident. Parfois, l'antenne à cadres croisés est remplacée par un réseau antennaire de type Adcock.

Cependant, lorsque à partir d'une plate-forme terrestre ou maritime, on souhaite déterminer la direction d'arrivée d'un signal électromagnétique issu d'un émetteur distant placé au niveau du sol, autrement dit, lorsqu'on souhaite déterminer l'angle de gisement d'arrivée d'un signal à angle de site nul ou quasi-nul, les mesures sont parfois biaisées par la détection d'ondes ayant des angles de site non nuls et une polarisation non verticale. En effet, parfois, certaines ondes captées par l'antenne sont initialement émises depuis le sol, puis réfléchies par l'ionosphère qui modifie leur polarisation. L'application de l'algorithme de Watson-Watt conduit alors à l'obtention de valeurs de gisement erronées.

Un brevet britannique publié sous le numéro GB1144206 divulgue une méthode utilisant 2N antennes pour calculer, pour 2N-1 paires d'antennes choisies parmi lesdites 2N antennes, un déphasage et un rapport d'amplitude entre les signaux reçus sur les deux antennes de la paire. Ces déphasages et rapports d'amplitude sont ensuite exploités pour déterminer la direction d'arrivée des N ondes électromagnétiques. Toutefois, ce document ne permet pas à l'homme du métier de déterminer par une relation simple la direction d'arrivée d'un signal reçu sur un réseau antennaire de type Adcock.

Un but de l'invention est d'améliorer les mesures de direction d'arrivée de signaux électromagnétiques reçus sur une antenne à cadres croisés ou un réseau antennaire de type Adcock en exécutant un procédé palliant les inconvénients précités, notamment tenant compte de l'ellipticité de l'onde porteuse des signaux reçus. A cet effet, l'invention a pour objet un procédé de mesure de l'angle d'arrivée en gisement θ de signaux électromagnétiques en bande HF reçus par une antenne à cadres croisés ou un réseau antennaire de type Adcock, caractérisé en ce qu'il comporte au moins les étapes suivantes :

> o mesurer le déphasage Δφ entre les signaux acquis respectivement sur la voie cosinus et sinus de l'antenne ;
> o mesurer le rapport R des amplitudes des signaux acquis respectivement sur la voie cosinus et sinus de l'antenne ;
> o déterminer l'angle d'arrivée en gisement θ de l'onde en fonction du déphasage Δφ et du rapport R.

L'angle de gisement θ est déterminé par la relation suivante :

$$\tan(2.\theta) = \frac{2}{R - \frac{1}{R}}.\cos(\Delta\varphi)$$

avec $R = \dfrac{\|\bar{a}_c\|}{\|\bar{a}_s\|}$, $\|\bar{a}_c\|$ étant l'amplitude du signal reçu sur le cadre cosinus, et $\|\bar{a}_s\|$ étant l'amplitude du signal reçu sur le cadre sinus.

Selon un mode de mise en oeuvre du procédé de mesure d'angle selon l'invention, une fonction de correction $f_c$ est appliquée sur la valeur d'angle d'arrivée en gisement θ mesurée, les valeurs de ladite fonction de correction étant produites pendant une phase de calibration enregistrant l'écart entre l'angle d'arrivée réel des signaux reçus par l'antenne et l'angle d'arrivée mesuré.

Selon un mode de mise en oeuvre du procédé de mesure d'angle selon l'invention, une étape d'évaluation de la qualité de la mesure de direction θ est exécutée, ladite étape comprenant la détermination de l'angle d'ellipticité τ de polarisation du signal de réponse à l'onde porteuse du signal reçu, une note de qualité décroissant avec l'augmentation de l'angle d'ellipticité τ étant attribuée à la mesure d'angle d'arrivée en gisement θ.

Selon un mode de mise en oeuvre du procédé de mesure d'angle selon l'invention, l'angle d'ellipticité τ est déterminé par la relation suivante :

$$\sin(2.\tau) = \frac{2}{R + \dfrac{1}{R}}.\sin(\Delta\varphi)$$

Selon un mode de mise en oeuvre du procédé de mesure d'angle selon l'invention, une mesure d'angle par corrélation vectorielle est en outre effectuée, la mesure $\theta_2$ produite par la corrélation vectorielle étant combinée avec la mesure $\theta_1$ produite par l'étape de détermination de l'angle d'arrivée en gisement de l'onde en fonction du déphasage $\Delta\varphi$ et du rapport R, la corrélation vectorielle comprenant une phase de calibration pour acquérir et enregistrer les mesures par l'antenne d'un signal de calibration variant en gisement et de fréquence fixe ou variable, et une phase de mesure de signaux détectés, ladite phase de mesure comprenant au moins les étapes suivantes :

○ acquérir les signaux détectés sur au moins un canal de fréquence;
○ pour chaque canal de fréquence $f_i$, corréler les signaux acquis avec les enregistrements issus de la calibration de fréquence proche de $f_i$ et déterminer la direction d'arrivée des signaux en recherchant l'angle de gisement $\theta$ pour lequel le maximum corrélation est atteint.

Selon un mode de mise en oeuvre du procédé de mesure d'angle selon l'invention, lors de la phase de calibration, chaque acquisition est enregistrée dans une table sous la forme d'un vecteur d'intercorrélation, les vecteurs de ladite table étant ensuite corrélés avec un autre vecteur d'intercorrélation issu des signaux acquis en phase de mesure, chacun desdits vecteurs d'intercorrélation étant calculé en exécutant au moins les étapes suivantes :

○ acquérir, au moins sur le cadre sinus et le cadre cosinus de l'antenne, N mesures de signaux, $N \geq 1$, sur une durée $\Delta t$ ;
○ pour p mesures parmi les N mesures effectuées précédemment, calculer un vecteur d'intercorrélation élémentaire $X_k$ ;
○ calculer un vecteur d'intercorrélation moyen X en moyennant les p vecteurs d'intercorrélation élémentaires $X_k$ calculés précédemment.

Selon un mode de mise en oeuvre du procédé de mesure d'angle selon l'invention, un vecteur d'intercorrélation élémentaire $X_k$ issu d'une mesure k est égal à

$$X_k = \frac{1}{\left\|X_{0,k}\right\|^2}\begin{pmatrix} X_{0,k}.X_{0,k}^H \\ X_{0,k}.X_{c,k}^H \\ X_{0,k}.X_{s,k}^H \end{pmatrix},$$

$X_{0,k}$ étant la mesure complexe acquise sur le monopôle, $X_{c,k}$ étant la mesure complexe acquise sur le cadre cosinus, $X_{s,k}$ étant la mesure complexe acquise sur le cadre sinus, $^H$ étant l'opérateur hermitien.
L'invention a également pour objet un goniomètre mettant en oeuvre un procédé de mesure d'angle tel que décrit plus haut.
Le procédé de mesure d'angle tel que décrit plus haut peut être utilisé sur un navire ou une plate-forme maritime, l'antenne étant fixée sur ledit navire ou ladite plate-forme, le procédé localisant en gisement des émetteurs placés sur des engins flottants évoluant dans un rayon de quelques centaines de kilomètres dudit navire ou de ladite plate-forme.
D'autres caractéristiques apparaîtront à la lecture de la description détaillée donnée à titre d'exemple et non limitative qui suit faite en regard de dessins annexés qui représentent :

- les figures 1a et 1b, une vue en perspective et de dessus d'un premier exemple d'antenne à cadres croisés recevant les signaux traités par le procédé selon l'invention,
- les figures 2a et 2b, une vue en perspective et de dessus d'un deuxième exemple d'antenne à cadres croisés recevant les signaux traités par le procédé selon l'invention,
- la figure 3a, un graphique illustrant un déphasage entre des signaux reçus sur les cadres de l'antenne lorsque l'onde porteuse desdits signaux est polarisée verticalement,

- la figure 3b, un graphique illustrant un déphasage entre des signaux reçus sur les cadres de l'antenne lorsque l'onde porteuse desdits signaux n'est pas polarisée verticalement,
- la figure 4, un synoptique présentant les étapes d'un premier mode de mise en oeuvre du procédé selon l'invention,
- la figure 5, un synoptique présentant les étapes d'un deuxième mode de mise en oeuvre du procédé selon l'invention,
- la figure 6, un synoptique présentant les étapes d'un troisième mode de mise en oeuvre du procédé selon l'invention.

Dans un souci de clarté, les mêmes références dans des figures différentes désignent les mêmes objets.

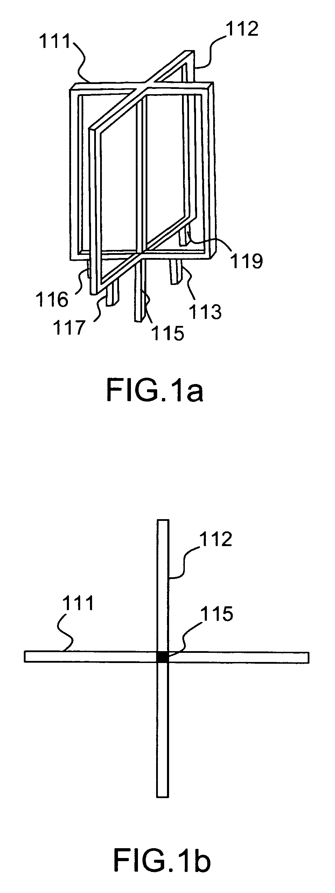

Les figures 1a et 1b présentent un premier exemple d'antenne à cadres croisés recevant les signaux traités par le procédé de mesure d'angle selon l'invention. La figure 1a est une vue en perspective de l'antenne, la figure 1b montrant l'antenne vue de dessus.

L'antenne 100 comporte un premier cadre 111 orthogonal à un second cadre 112, les deux cadres 111, 112 étant, dans l'exemple, formés par des rectangles métalliques maintenus par un support 115 et inscrits dans des plans sensiblement verticaux. Le premier cadre 111 est parfois qualifié de « cadre sinus », le deuxième cadre 112 étant qualifié de « cadre cosinus ». L'antenne 100 comporte une troisième voie de réception sous la forme, dans l'exemple, d'un monopôle réalisé avec des tiges métalliques verticales 116, 117, 118, 119 placées sous les cadres 111, 112.

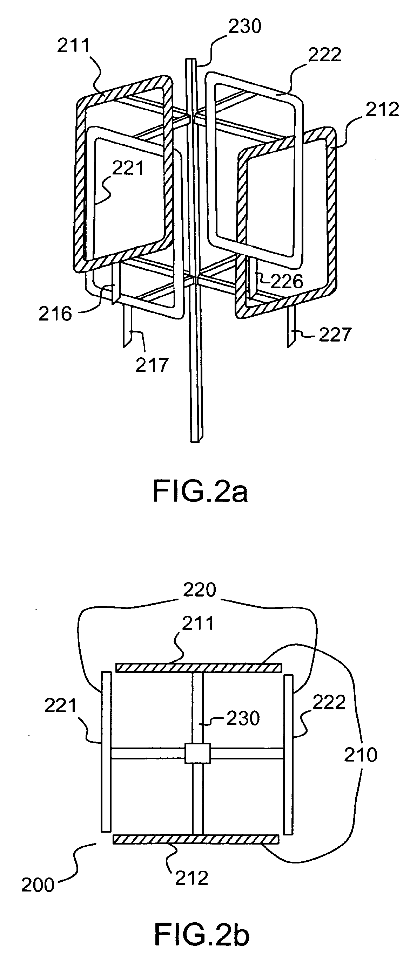

Les figures 2a et 2b présentent un deuxième exemple d'antenne à cadres croisés recevant les signaux traités par le procédé de mesure d'angle selon l'invention. La figure 2a est une vue en perspective de l'antenne, la figure 2b montrant l'antenne vue de dessus.

L'antenne 200 comporte deux paires 210, 220 de cadres maintenues par un support 230, les cadres de chaque paire 210, 220 étant parallèles entre-eux, les cadres 211, 212 de la première paire 210 étant orthogonaux aux cadres 221, 222 de la deuxième paire 220, tous les cadres 211, 212, 221, 222 de l'antenne étant, dans l'exemple, des rectangles métalliques inscrits dans des plans sensiblement verticaux. Dans l'exemple, les paires 210, 220 de cadres sont maintenues autour du support 230 de telle manière qu'elle forment sensiblement un carré vu de dessus. Dans l'exemple, l'antenne comporte également, sous chaque cadre 211, 212, 221, 222, une tige métallique 216, 217 226, 227, sensiblement verticale, l'ensemble de ces tiges 216, 217 226, 227 formant la voie monopôle de l'antenne. Cette antenne est, d'un point de vue théorique, équivalente à l'antenne présentée en figures 1a, 1b. Par la suite, on parlera de « cadre sinus » et de « cadre cosinus » en référence au premier modèle d'antenne présenté en figures 1a, 1b, ce vocabulaire s'appliquant aux paires 210, 220 de cadres 211, 212, 221, 222 lorsque le procédé est mis en oeuvre sur le deuxième modèle d'antenne présenté en figures 2a, 2b.

Selon un autre mode de mise en oeuvre du procédé selon l'invention, l'antenne à cadres croisés est remplacée par un réseau antennaire de type Adcock, ce type de réseau antennaire pouvant être modélisé de manière analogue aux antennes à cadres croisés, c'est-à-dire au moins par un cadre sinus et un cadre cosinus.

Par ailleurs, le monopôle de l'antenne peut être remplacé par un dipôle ou tout autre antenne servant de voie de référence.

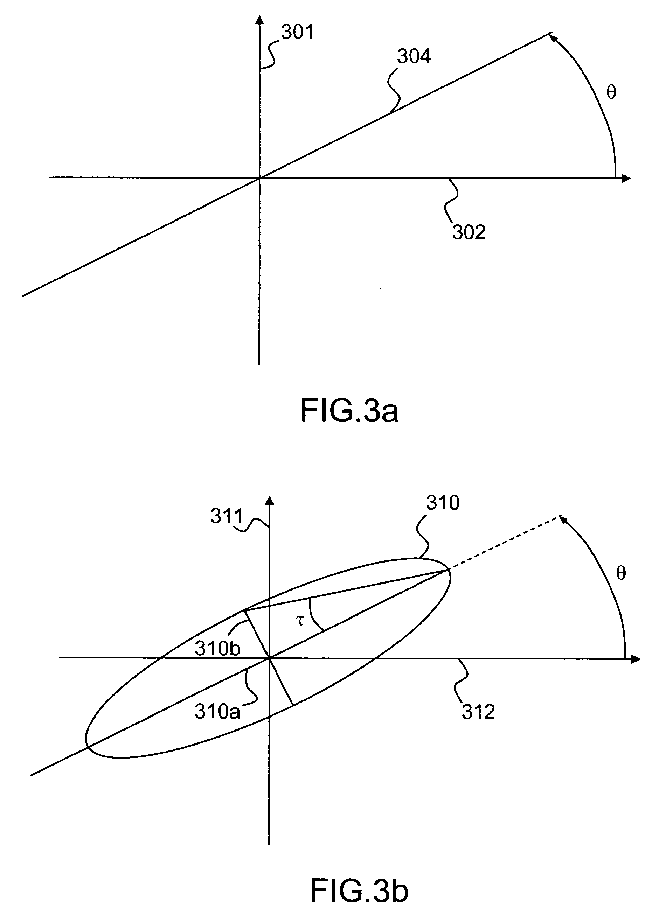

La figure 3a illustre, par un graphique, le déphasage entre des signaux reçus sur les cadres de l'antenne lorsque l'onde porteuse desdits signaux est polarisée verticalement. La tension reçue par le cadre sinus est représentée sur l'axe 301 des ordonnées, tandis que la tension reçue par le cadre cosinus est représentée sur l'axe 302 des abscisses. Le déphasage entre les signaux reçus est représenté par une droite 304.

Lorsque l'onde porteuse du signal est polarisé non verticalement ou qu'elle a subi l'influence de réflecteurs à proximité de l'antenne réceptrice, les signaux reçus sur les voies sinus et cosinus sont affublés d'un déphasage supplémentaire induisant une réponse elliptique des cadres, comme l'illustre la figure 3b.

La figure 3b illustre, par un graphique, le déphasage entre des signaux reçus sur les cadres de l'antenne lorsque l'onde porteuse desdits signaux est polarisée elliptiquement. La tension reçue par le cadre sinus est représentée sur l'axe 311 des ordonnées, tandis que la tension reçue par le cadre cosinus est représentée sur l'axe 312 des abscisses. Le déphasage entre les signaux reçus est représenté par une ellipse 310.

Le signal reçu sur le monopôle et les deux cadres cosinus et sinus d'une antenne peut alors s'exprimer comme suit :

$$\begin{cases} U_0(t) = \mathrm{Re}(\beta.s(t).e^{j\omega t}) = \mathrm{Re}(\overline{a}_0(t).e^{j\omega t}) \\ U_c(t) = \mathrm{Re}(\alpha.s(t).\cos(\theta).e^{j\omega t}) = \mathrm{Re}(\overline{a}_c(t).e^{j\omega t + \varphi_0 + \Delta\varphi}) \\ U_s(t) = \mathrm{Re}(\alpha.s(t).\sin(\theta).e^{j\omega t}) = \mathrm{Re}(\overline{a}_s(t).e^{j(\omega t + \varphi_0)}) \end{cases}$$

où $U_0$, $U_c$ et $U_s$ désignent les tensions en sortie d'antenne respectivement sur le monopôle, sur le cadre cosinus et sur le cadre sinus, s(t) désignant le signal modulant, w désignant la pulsation de l'onde porteuse, les termes complexes $\alpha$

et p étant respectivement dépendants de la hauteur efficace d'un cadre et du monopôle, les termes $\overline{a}_0$, $\overline{a}_c$ et $\overline{a}_s$ désignant les enveloppes complexes des signaux, $\varphi_0$ désignant la différence de phase entre le cadre sinus et le monopôle, $\Delta\varphi$ désignant le déphasage entre le signal reçu sur le cadre sinus et le cadre cosinus, le déphasage $\Delta\varphi$ étant nul lorsque l'onde est polarisée verticalement. Les coefficients $\alpha$ et $\beta$ sont déterminés lors de la calibration de l'antenne dans son environnement d'utilisation au moyen d'une onde polarisée verticalement et d'incidence nulle en comparant la réponse de l'antenne à la réponse théorique de l'antenne (en cos($\theta$) et sin($\theta$) avec $\alpha$ et $\beta$ égaux à 1).

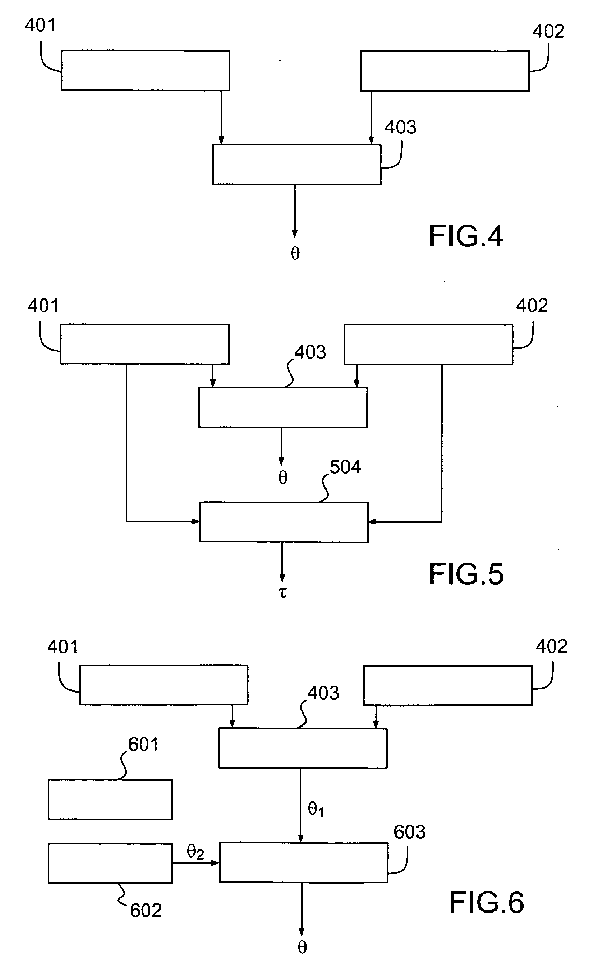

La figure 4 présente, à travers un synoptique, les étapes d'un premier mode de mise en oeuvre du procédé selon l'invention.

Dans un premier temps 401, le déphasage $\Delta\varphi$ entre le signal reçu sur le cadre sinus et le cadre cosinus est mesuré. Parallèlement 402, le rapport entre l'amplitude $\|\overline{a}_c\|$ du signal reçu sur le cadre cosinus et l'amplitude $\|\overline{a}_s\|$ du signal reçu sur le cadre sinus est déterminé.

Dans un deuxième temps 403, l'angle de gisement d'arrivée de l'onde porteuse des signaux est déterminé à partir du déphasage $\Delta\varphi$ et du rapport R entre $\|\overline{a}_c\|$ et $\|\overline{a}_s\|$. L'angle de gisement d'arrivée $\theta$ peut en effet être exprimé en fonction de ces deux valeurs comme suit :

$$\tan(2.\theta) = \frac{2\|\overline{a}_c\|\|\overline{a}_s\|}{\|\overline{a}_c\|^2 - \|\overline{a}_s\|^2}.\cos(\Delta\varphi) = \frac{2}{\dfrac{\|\overline{a}_c\|}{\|\overline{a}_s\|} - \dfrac{\|\overline{a}_s\|}{\|\overline{a}_c\|}}.\cos(\Delta\varphi) \qquad (E1)$$

De plus, comme $\forall k \in Z$, $\tan(2.\theta) = \tan(2.\theta + k\pi)$, l'équation (E1) ne permet de déterminer $\theta$ qu'à $k.\pi/2$ près.

Pour lever l'ambiguïté à $(2.k+1).\pi/2$, c'est-à-dire déterminer la dimension du grand axe 310a de l'ellipse 310, on calcule la rotation d'angle $\theta$ des réponses sur l'axe cosinus et l'axe sinus comme suit :

$$\text{Si } \|\cos(\theta).\overline{a}_c + \sin(\theta).\overline{a}_s\| < \|\cos(\theta).\overline{a}_s - \sin(\theta).\overline{a}_c\|, \text{ alors } \theta = \theta + \frac{\pi}{2} \qquad (E2)$$

Pour lever l'ambiguïté à $k.\pi$, c'est-à-dire déterminer la dimension du petit axe 310b de l'ellipse 310, on calcule la valeur $\varphi_1$ suivante :

$$\varphi_1 = \arg(\overline{a}_c + j.\overline{a}_s) - \arg(\overline{a}_0) - \arg(\alpha) + \arg(\beta) - \theta \qquad (E3)$$

où arg(z) représente l'argument du nombre complexe z. Sur une antenne parfaite, la grandeur $\varphi_1$ vaut 0 ou $\pi$. Pour tenir compte des erreurs de modèle, il convient d'appliquer la règle suivante :

$$\text{Si } \|\varphi_1\| > \frac{\pi}{2} \text{ alors } \theta = \theta + \pi \qquad (E4)$$

En outre, pour compenser les erreurs de modèle, la valeur d'angle de gisement $\theta$ obtenue est, de préférence, corrigée par une fonction $f_c$ générée par une phase de calibration des instruments de mesure utilisés pour déterminer ledit angle de gisement $\theta$ :

$$\theta_c = \theta + f_c(\theta) \qquad (E5)$$

Pendant la phase de calibration des instruments, des signaux dont on connaît l'angle de gisement d'arrivée sont émis vers l'antenne. On peut ainsi mesurer, pour plusieurs angles d'émission, l'écart entre l'angle de gisement réel et l'angle de gisement mesuré, ces écarts mesurés étant des valeurs de la fonction $f_c$. Généralement, on stocke des valeurs discrètes de la fonction $f_c$ dans une table de correction. Les valeurs stockées dans cette table sont ensuite employées pour corriger les valeurs d'angle mesurées.

A l'issue du procédé de la figure 4, un angle θ est obtenu, cet angle θ étant l'estimation de l'angle de gisement d'arrivée des signaux reçus par l'antenne à cadres croisés.

La figure 5 présente, à travers un synoptique, les étapes d'un deuxième mode de mise en oeuvre du procédé selon l'invention. Par rapport au premier mode de mise en oeuvre présenté en figure 4, une note de fiabilité est attribuée à la valeur estimée de la direction d'arrivée du signal reçu. Cette note de fiabilité dépend de l'angle d'ellipticité τ de polarisation du signal de réponse de l'antenne à l'onde porteuse du signal reçu. En effet, la force électromotrice induite par le flux du champ magnétique de l'onde incidente à travers chaque cadre de l'antenne prend une forme elliptique lorsque la polarisation de l'onde incidente est elliptique. Dans l'exemple, la note attribuée est une fonction décroissante de la valeur τ de l'angle d'ellipticité. On calcule la valeur τ grâce à la relation suivante :

$$\sin(2.\tau) = \frac{2\|\overline{a}_c\|\|\overline{a}_s\|}{\|\overline{a}_c\|^2 + \|\overline{a}_s\|^2}.\sin(\Delta\varphi) = \frac{2}{\dfrac{\|\overline{a}_c\|}{\|\overline{a}_s\|} + \dfrac{\|\overline{a}_s\|}{\|\overline{a}_c\|}}.\sin(\Delta\varphi) \qquad (E6)$$

La figure 6 présente, à travers un synoptique, les étapes d'un troisième mode de mise en oeuvre du procédé selon l'invention. Par rapport au procédé de la figure 4, une corrélation vectorielle comprenant deux phases 601, 602 est ajoutée. Une première phase 601 de calibration et une seconde phase 602 de mesure d'angle de gisement par corrélation vectorielle sont donc ajoutées, la première phase 601 de calibration ne devant pas être confondue avec la calibration des instruments de mesure décrite plus haut. La première phase 601 de calibration est indispensable à l'exécution de la seconde phase 602 de mesure d'angle de gisement par corrélation vectorielle. Cette étape 602 de corrélation vectorielle peut permettre de corriger la valeur d'angle déterminée à l'aide du procédé de la figure 4. Par exemple, une valeur d'angle de gisement peut être déterminée 603 en calculant la moyenne entre la valeur trouvée avec le procédé de la figure 4 et la valeur trouvée par la corrélation vectorielle 602.

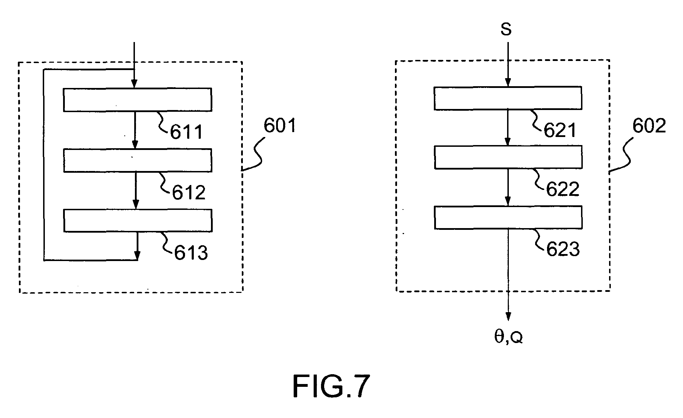

La figure 7 détaille, à travers un synoptique, la première phase 601 de calibration et la seconde phase 602 de mesure d'angle de gisement par corrélation vectorielle. La première phase 601 est une phase préparatoire de calibration de l'antenne et la seconde phase 602 est une phase de mesure au cours de laquelle on cherche à déterminer la direction d'arrivée d'un signal reçu par l'antenne. L'antenne à cadres croisés comprend, dans l'exemple, deux cadres orthogonaux et un monopôle.

La première phase 601 de calibration est menée dans les conditions d'utilisation finale de l'antenne. Par exemple, si dans les conditions habituelles d'utilisation, des structures physiques sont situées à proximité de l'antenne, la calibration est conduite en présence desdites structures, celles-ci étant susceptibles de modifier la réponse de l'antenne en créant des couplages électromagnétiques particuliers. Des signaux électromagnétiques de calibration sont émis en direction de l'antenne en faisant varier leur fréquence d'émission et leur angle de gisement d'arrivée. Dès lors, une table de calibration peut être remplie en enregistrant les réponses de l'antenne à des signaux variant en fréquences et en gisement.

Par exemple, un émetteur fixe est placé à distance d'un navire comportant une antenne à cadres croisés. L'émetteur est commandé pour émettre des signaux en balayant une bande de fréquence à calibrer, puis le navire est déplacé pour faire varier l'angle de gisement d'arrivée des signaux sur l'antenne. L'antenne ne doit pas être déplacée par rapport au navire pendant la phase de calibration 601, faute de quoi les conditions électromagnétiques de réception seraient faussées. Par ailleurs l'angle de site d'arrivée des signaux sur l'antenne de réception est choisi pour correspondre aux cas d'emploi du procédé de mesure d'angle selon l'invention. Par exemple, si le procédé est utilisé par des navires pour déterminer la direction d'arrivée de signaux émis par d'autres navires, l'angle de site choisi pour la calibration sera nul ou quasi-nul.

Par ailleurs, dans des cas d'utilisation particuliers, la fréquence du signal de calibration est maintenue fixe, notamment lorsqu'on souhaite uniquement détecter des signaux spécifiques dont la fréquence est connue à l'avance.

Plus précisément, la phase de calibration 601 de la figure 7 comporte une première étape 611 d'acquisition et de détection de signaux, une deuxième étape 612 de calcul d'un vecteur d'acquisition correspondant aux signaux émis, et une troisième étape 613 de stockage du vecteur d'acquisition dans la table de calibration. Dans l'exemple, ces trois étapes 611, 612, 613 sont exécutées pour un angle de gisement fixé et pour des fréquences d'émission variant dans le domaine des hautes fréquences, puis ces étapes 611, 612, 613 sont réitérées avec des angles de gisement différents, jusqu'à ce que tous les angles de gisement souhaités soient couverts.

Lors de la première étape 611, des fréquences d'acquisition sont choisies parmi les fréquences d'émission des signaux. Ensuite, pour chaque fréquence d'acquisition F choisie, le signal de fréquence F reçu par l'antenne à cadres croisés est acquis sur trois voies : une voie monopôle $X_0$, une voie correspondant au premier cadre $X_c$ de l'antenne, parfois qualifié de « cadre cosinus », et une voie correspondant au deuxième cadre $X_s$ de l'antenne parfois qualifié de « cadre sinus ». De préférence, plusieurs mesures de signaux sont acquises successivement sur ces trois voies $X_0$, $X_c$, $X_s$, cette première étape 611 d'acquisition de signaux étant alors, de préférence, exécutée sur une durée $\Delta t_{cal}$ suffisamment longue pour acquérir une série de plusieurs mesures, mais suffisamment courte pour que l'angle de gisement d'arrivée des signaux ne change quasiment pas au cours de la série de mesures si l'antenne est mobile par rapport à l'émetteur de signaux. Ainsi, à l'issue de la première étape 611, N acquisitions $X_{0,1}$,.., $X_{0,N}$, sur la voie monopôle, N acquisitions $X_{c,1}$,..., $X_{c,N}$, sur la voie cosinus et N acquisitions $X_{s,1}$,..., $X_{s,N}$, sur la voie sinus sont réalisées pour chaque fréquence F d'acquisition.

Lors de la deuxième étape 612, pour chaque fréquence F d'acquisition, un vecteur X d'intercorrélation entre les trois voies et ramené à une voie de référence, est calculé. Pour une observation k, $1 \leq k \leq N$, le vecteur d'intercorrélation élémentaire $X_k$ correspondant aux acquisitions de l'observation k est déterminé comme suit :

$$X_k = \frac{1}{\left\| X_{0,k} \right\|^2} \cdot \begin{pmatrix} X_{0,k}.X_{0,k}^H \\ X_{0,k}.X_{c,k}^H \\ X_{0,k}.X_{s,k}^H \end{pmatrix}$$

$X_{0,k}$ étant la mesure complexe acquise sur le monopôle, $X_{c,k}$ étant la mesure complexe acquise sur le cadre cosinus, $X_{s,k}$ étant la mesure complexe acquise sur le cadre sinus, $^H$ étant l'opérateur hermitien. La voie de référence choisie dans l'exemple est la voie correspondant au monopôle. Dans d'autres mises en oeuvres du procédé de mesure d'angle selon l'invention, la voie de référence choisie est celle du cadre sinus ou du cadre cosinus.

Dans l'exemple, le vecteur d'intercorrélation X est calculé en moyennant les mesures acquises sur un nombre s d'observations, $s \leq N$, de manière à limiter l'influence du bruit sur le vecteur d'intercorrélation X :

$$X = \frac{1}{s} \sum_{k=1}^{s} X_k$$

En outre, le vecteur d'intercorrélation X est, de préférence, normalisé à 1 :

$$X_{norm} = \frac{X}{\left\| X \right\|}$$

Lors de la troisième étape 613, pour chaque fréquence F d'acquisition, des données caractérisant les signaux acquis sont stockées dans la table de calibration. Dans l'exemple, ces données caractérisantes sont stockées sous la forme des vecteurs d'intercorrélation normalisés $X_{norm}$, calculés précédemment pour chaque fréquence d'acquisition F. La table de calibration est ainsi alimentée avec les vecteurs d'intercorrélation normalisés formés à partir de détections et acquisitions de signaux de fréquences différentes.

La première étape 611, la deuxième étape 612 et la troisième étape 613 sont réitérées successivement pour des signaux d'angles de gisement d'arrivée différents, de sorte qu'à l'issue de la phase de calibration 601, pour chaque fréquence d'acquisition, p vecteurs d'intercorrélation normalisés $X_{norm}(\theta_1)$, ... , $X_{norm}(\theta_p)$ sont stockés, chacun desdits vecteurs correspondant à un signal reçu avec un angle de gisement d'arrivée $\theta_1$, ... , $\theta_p$ différent. C'est pourquoi un vecteur d'intercorrélation stocké dans la table de calibration est par la suite qualifié de « vecteur directionnel ».

Selon un autre mode de mise en oeuvre de la phase de calibration 601, la première étape 611, la deuxième étape 612 et la troisième étape 613 sont exécutées pour une fréquence fixe et pour des angles de gisement variant. Les étapes 611, 612, 613 sont ensuite réitérées en modifiant la fréquence d'émission. Par exemple, un émetteur mobile est déplacé autour de l'antenne, l'émetteur modifiant sa fréquence d'émission après l'accomplissement d'un tour complet, de sorte qu'après q tours, q fréquences différentes sont calibrées.

Une fois la phase de calibration 601 effectuée, une ou plusieurs phases de mesure 602 peuvent être exécutées. Une phase de mesure 602 permet de déterminer la direction d'arrivée en gisement d'un signal détecté. La phase de mesure 602 de la figure 7 comporte une première étape 621 de détection et d'acquisition d'un signal, une deuxième étape 622 de calcul d'un vecteur d'acquisition, une troisième étape 623 de corrélation entre le vecteur d'acquisition et des vecteurs issus de la calibration.

Lors de la première étape 621, le signal reçu est acquis sur une durée $\Delta t$ et découpé en plusieurs canaux fréquentiels. A l'issue de la première étape 621, une ou plusieurs acquisitions du signal sont effectuées pour chaque canal fréquentiel et, de préférence, sur les trois voies de l'antenne.

Lors de la deuxième étape 622, un vecteur d'intercorrélation est calculé à partir des acquisitions effectuées au cours de la première étape 621. Le vecteur d'intercorrélation est calculé selon le même procédé que celui décrit plus haut pour la deuxième étape 612 de la phase de calibration. A l'issue de cette deuxième étape 622, on obtient pour chaque canal fréquentiel à analyser, un vecteur d'acquisition $X_{norm}$ formé à partir des signaux acquis par l'antenne.

Lors de la troisième étape 623, des calculs de corrélation vectorielle sont exécutés pour déterminer la direction d'arrivée des signaux reçus par l'antenne. Dans l'exemple, le critère de corrélation utilisé est le carré du module du produit scalaire complexe entre vecteurs d'acquisition. Aussi, pour chaque canal fréquentiel analysé, les vecteurs directionnels correspondant à des angles de gisement différents et à une fréquence proche de ce canal fréquentiel et consignés dans la table de calibration sont identifiés, puis le carré du module des produits scalaires complexes entre le vecteur d'acquisition $X_{norm}$ formé à partir du signal acquis par l'antenne sur ce canal fréquentiel et chacun desdits vecteurs directionnels identifiés est calculé. Pour chaque canal fréquentiel, le maximum de ce module est recherché, le vecteur directionnel de la table de calibration permettant d'atteindre ce maximum étant considéré comme celui correspondant à l'angle d'arrivée du signal reçu comme l'indique l'expression suivante :

$$\theta(f) = \arg\max_{k}\left(\left|X_{norm} \cdot T(f,\theta_k)\right|^2\right)$$

où f est, dans l'exemple, la fréquence centrale du canal fréquentiel utilisé, $X_{norm}$ le vecteur d'acquisition du signal dont on souhaite déterminer la direction d'arrivée, et $T(f,\theta_k)$ un vecteur directionnel consigné dans la table de calibration et correspondant à un signal de fréquence f arrivant sur l'antenne avec un angle de gisement $\theta$.

En sortie de la phase de mesure 602, une mesure $\theta$ d'angle de gisement est obtenue pour chaque canal fréquentiel analysé. Par ailleurs, une note de qualité Q est associée à chaque mesure $\theta$ d'angle de gisement obtenue, cette note étant liée au niveau atteint par le critère de corrélation. En effet, une note maximale est obtenue lorsque les vecteurs $X_{norm}$ et $T(f,\theta)$ sont colinéaires, une note moindre étant obtenue lorsque l'angle formé entre les vecteurs $X_{norm}$ et $T(f,\theta)$ augmente. Dans l'exemple, Q est donné par la relation suivante :

$$Q(f) = \max_{k}\left(\left|X_{norm} \cdot T(f,\theta_k)\right|^2\right)$$

où , « · » représente le produit scalaire complexe.

Plusieurs angles de gisement différents peuvent être déterminés, si par exemple plusieurs émetteurs dans des directions différentes émettent simultanément des signaux.

Par ailleurs, un angle de gisement d'arrivée $\theta$ plus précis peut être obtenu en calculant une valeur interpolée à partir de quelques valeurs d'angle de gisement $\theta_i$ autour du maximum de corrélation. A titre d'exemple, une interpolation quadratique peut être effectuée à partir des trois valeurs autour du maximum obtenu.

## Revendications

1. Procédé de mesure de l'angle d'arrivée en gisement $\theta$ de signaux électromagnétiques en bande HF reçus par une antenne à cadres croisés ou un réseau antennaire de type Adcock, **caractérisé en ce qu'**il comporte au moins les étapes suivantes :

   ○ mesurer le déphasage $\Delta\varphi$ entre les signaux acquis respectivement sur la voie cosinus et sinus de l'antenne (401) ;
   ○ mesurer le rapport R des amplitudes des signaux acquis respectivement sur la voie cosinus et sinus de l'antenne (402) ;
   ○ déterminer l'angle d'arrivée en gisement $\theta$ de l'onde par la relation suivante :

$$\tan(2.\theta) = \frac{2}{R - \frac{1}{R}} . \cos(\Delta\varphi)$$

avec $R = \frac{\|\overline{a}_c\|}{\|\overline{a}_s\|}$, $\|\overline{a}_c\|$ étant l'amplitude du signal reçu sur le cadre cosinus, et $\|\overline{a}_s\|$ étant l'amplitude du signal reçu sur le cadre sinus.

2. Procédé de mesure d'angle selon la revendication 2, **caractérisé en ce qu'**une fonction de correction $f_c$ est appliquée sur la valeur d'angle d'arrivée en gisement θ mesurée, les valeurs de ladite fonction de correction étant produites pendant une phase de calibration enregistrant l'écart entre l'angle d'arrivée réel des signaux reçus par l'antenne et l'angle d'arrivée mesuré.

3. Procédé de mesure d'angle selon la revendication 1 ou 2, **caractérisé en ce qu'**une étape d'évaluation de la qualité de la mesure de direction θ est exécutée, ladite étape comprenant la détermination de l'angle d'ellipticité τ de polarisation du signal de réponse à l'onde porteuse du signal reçu, une note de qualité décroissant avec l'augmentation de l'angle d'ellipticité τ étant attribuée à la mesure d'angle d'arrivée en gisement θ.

4. Procédé de mesure d'angle selon la revendication 3, **caractérisé en ce que** l'angle d'ellipticité τ est déterminé par la relation suivante :

$$\sin(2.\tau) = \frac{2}{R + \frac{1}{R}} . \sin(\Delta\varphi)$$

5. Procédé de mesure d'angle selon l'une des revendications 1 à 4, **caractérisé en ce qu'**il effectue en outre une mesure d'angle par corrélation vectorielle (601, 602), la mesure $θ_2$ produite par la corrélation vectorielle (602) étant combinée (603) avec la mesure $θ_1$ produite par l'étape (403) de détermination de l'angle d'arrivée en gisement de l'onde en fonction du déphasage Δφ et du rapport R, la corrélation vectorielle comprenant une phase de calibration (601) pour acquérir et enregistrer les mesures par l'antenne d'un signal de calibration variant en gisement et de fréquence fixe ou variable, et une phase de mesure (602) de signaux détectés, ladite phase de mesure comprenant au moins les étapes suivantes :

   o acquérir les signaux détectés sur au moins un canal de fréquence ;
   ○ pour chaque canal de fréquence $f_i$, corréler les signaux acquis avec les enregistrements issus de la calibration de fréquence proche de $f_i$ et déterminer la direction d'arrivée des signaux en recherchant l'angle de gisement θ pour lequel le maximum corrélation est atteint.

6. Procédé de mesure d'angle selon la revendication 5, **caractérisé en ce que** lors de la phase de calibration, chaque acquisition est enregistrée dans une table sous la forme d'un vecteur d'intercorrélation, les vecteurs de ladite table étant ensuite corrélés avec un autre vecteur d'intercorrélation issu des signaux acquis en phase de mesure (102), chacun desdits vecteurs d'intercorrélation étant calculé en exécutant au moins les étapes suivantes :

   ○ acquérir, au moins sur le cadre sinus et le cadre cosinus de l'antenne, N mesures de signaux, N ≥ 1, sur une durée Δt ;
   ○ pour p mesures parmi les N mesures effectuées précédemment, calculer un vecteur d'intercorrélation élémentaire $X_k$ ;
   ○ calculer un vecteur d'intercorrélation moyen X en moyennant les p vecteurs d'intercorrélation élémentaires $X_k$ calculés précédemment.

7. Procédé de mesure d'angle selon la revendication 6, **caractérisé en ce qu'**un vecteur d'intercorrélation élémentaire

$X_k$ issu d'une mesure k est égal à

$$X_k = \frac{1}{\|X_{0,k}\|^2} \cdot \begin{pmatrix} X_{0,k}.X_{0,k}^H \\ X_{0,k}.X_{c,k}^H \\ X_{0,k}.X_{s,k}^H \end{pmatrix},$$

$X_{0,k}$ étant la mesure complexe acquise sur le monopôle, $X_{c,k}$ étant la mesure complexe acquise sur le cadre cosinus, $X_{s,k}$ étant la mesure complexe acquise sur le cadre sinus, $^H$ étant l'opérateur hermitien.

8. Goniomètre comprenant une antenne à cadres croisés ou un réseau antennaire de type Adcock **caractérisé en ce qu'**il met en oeuvre un procédé de mesure d'angle selon l'une des revendications précédentes.

9. Utilisation du procédé de mesure d'angle selon l'une des revendications 1 à 7 sur un navire ou une plate-forme maritime, l'antenne étant fixée sur ledit navire ou ladite plate-forme, le procédé localisant en gisement des émetteurs placés sur des engins flottants évoluant dans un rayon de quelques centaines de kilomètres dudit navire ou de ladite plate-forme.

**Claims**

1. A method for measuring the bearing angle of arrival θ of electromagnetic HF band signals that are received by a crossed-loop antenna or an antenna array of the Adcock type, **characterised in that** it comprises at least the following steps:measuring the phase-shift Δφ between the signals respectively acquired on the cosine and the sine channel of the antenna (401);

   ○ measuring the ratio R of the amplitudes of the signals respectively acquired on the cosine and the sine channel of the antenna (402);
   ○ determining the bearing angle of arrival θ of the wave by the following relation:

$$\tan(2.\theta) = \frac{2}{R - \frac{1}{R}}.\cos(\Delta\varphi)$$

with $R = \frac{\|\bar{a}_c\|}{\|\bar{a}_s\|}$, $\|\bar{a}_c\|$ being the amplitude of the signal received on the cosine loop, and $\|\bar{a}_x\|$ being the amplitude of the signal received on the sine loop.

2. The angle measuring method according to claim 1, **characterised in that** a correction function $f_c$ is applied to the measured value of the bearing angle of arrival θ, the values of said correction function being produced during a calibration phase that records the difference between the actual angle of arrival of the signals received by the antenna and the measured angle of arrival.

3. The angle measuring method according to claim 1 or 2, **characterised in that** a step of assessing the quality of the direction measurement θ is executed, said step comprising the determination of the ellipticity angle τ of polarisation of the response signal to the carrier wave of the received signal, with a quality score decreasing with the increase in the ellipticity angle τ being attributed to the measurement of the bearing angle of arrival θ.

4. The angle measuring method according to claim 3, **characterised in that** the ellipticity angle τ is determined by the following relation:

$$\sin(2.\tau) = \frac{2}{R + \frac{1}{R}} \cdot \sin(\Delta\varphi)$$

.

5. The angle measuring method according to any one of claims 1 to 4, **characterised in that** it also carries out an angle measurement by vector correlation (601, 602), the measurement $\theta_2$ produced by the vector correlation (602) being combined (603) with the measurement $\theta_1$ produced by the step (403) of determining the bearing angle of arrival of the wave as a function of the phase-shift $\Delta\varphi$ and of the ratio R, the vector correlation comprising a calibration phases (601) for acquiring and recording the measurements by the antenna of a calibration signal varying with respect to its bearing and with a fixed or variable frequency, and a phase (602) of measuring detected signals, said measuring phase comprising at least the following steps:

○ acquiring the signals detected on at least one frequency channel;
○ correlating, for each frequency channel $f_i$, the acquired signals with the recordings that come from the frequency calibration close to $f_i$ and determining the direction of arrival of the signals by looking for the bearing angle $\theta$ for which the maximum correlation is achieved.

6. The angle measuring method according to claim 5, **characterised in that** during the calibration phase, each acquisition is recorded in a table in the form of an inter-correlation vector, the vectors of said table being subsequently correlated with another inter-correlation vector coming from the signals acquired during the measuring phase (102), each of said inter-correlation vectors being calculated by executing at least the following steps:

○ acquiring, at least on the sine loop and the cosine loop of the antenna, N measurements of signals, N $\geq$1, over a duration $\Delta$t;
○ calculating, for p measurements from the N previously completed measurements, an elementary inter-correlation vector $X_k$;
○ calculating an average inter-correlation vector X by averaging the p previously calculated elementary inter-correlation vectors $X_k$.

7. The angle measuring method according to claim 6, **characterised in that** an elementary inter-correlation vector $X_k$ coming from a measurement k is equal to:

$$X_k = \frac{1}{\|X_{0,k}\|^2} \cdot \begin{pmatrix} X_{0,k} \cdot X_{0,k}^H \\ X_{0,k} \cdot X_{c,k}^H \\ X_{0,k} \cdot X_{s,k}^H \end{pmatrix},$$

$X_{0,k}$ being the complex measurement acquired on the monopole, $X_{c,k}$ being the complex measurement acquired on the cosine loop, $X_{s,k}$ being the complex measurement acquired on the sine loop, $^H$ being the Hermitian operator.

8. A goniometer comprising a crossed-loop antenna or an antenna array of the Adcock type, **characterised in that** it implements an angle measuring method according to any one of the preceding claims.

9. The use of the angle measuring method according to any one of claims 1 to 7 on a vessel or a maritime platform, the antenna being fixed to said vessel or said platform, said method locating the bearing of emitters placed on floating craft moving within a radius of several hundred kilometres of said vessel or said platform.

**Patentansprüche**

1. Verfahren zum Messen des Ankunftspeilwinkels $\theta$ von elektromagnetischen HF-Band-Signalen, die von einer Kreuzrahmenantenne oder einem Antennenfeld des Adcock-Typs empfangen werden, **dadurch gekennzeichnet, dass** es wenigstens die folgenden Schritte beinhaltet:Messen der Phasenverschiebung $\Delta\varphi$ zwischen den Signalen, die jeweils auf dem Kosinus- und Sinus-Kanal der Antenne (401) erfasst werden;

○ Messen des Verhältnisses R der Amplituden der Signale, die jeweils auf dem Kosinus- und Sinus-Kanal der Antenne (402) empfangen werden;

○ Ermitteln des Ankunftspeilwinkels θ der Welle anhand der folgenden Gleichung:

$$\tan(2.\theta) = \frac{2}{R - \frac{1}{R}}.\cos(\Delta\varphi)$$

wobei $R = \frac{\|\overline{a}_c\|}{\|\overline{a}_s\|}$, $\|\overline{a}_s\|$ die Amplitude des auf dem Kosinus-Rahmen empfangenen Signals und $\|\overline{a}_s\|$ die Amplitude des auf dem Sinus-Rahmen empfangenen Signals ist.

2. Winkelmessverfahren nach Anspruch 1, **dadurch gekennzeichnet, dass** eine Korrekturfunktion $f_c$ auf den Messwert des Ankunftspeilwinkels θ angewendet wird, wobei die Werte der Korrekturfunktion während einer Kalibrationsphase erzeugt werden, die die Differenz zwischen dem Ist-Ankunftswinkel der von der Antenne empfangenen Signale und dem gemessenen Ankunftswinkel aufzeichnet.

3. Winkelmessverfahren nach Anspruch 1 oder 2, **dadurch gekennzeichnet, dass** ein Schritt des Beurteilens der Qualität der Richtungsmessung θ ausgeführt wird, wobei der Schritt das Ermitteins des Polarisationselliptizitätswinkels τ des Antwortsignals zur Trägerwelle des empfangenen Signals beinhaltet, wobei eine mit der Zunahme des Elliptizitätswinkels τ abnehmende Qualitätsbewertung dem Messwert des Ankunftspeilwinkels θ zugeordnet wird.

4. Winkelmessverfahren nach Anspruch 3, **dadurch gekennzeichnet, dass** der Elliptizitätswinkel τ mittels der folgenden Gleichung ermittelt wird:

$$\sin(2.\tau) = \frac{2}{R + \frac{1}{R}}.\sin(\Delta\varphi)$$

5. Winkelmessverfahren nach einem der Ansprüche 1 bis 4, **dadurch gekennzeichnet, dass** es ferner eine Winkelmessung durch Vektorkorrelation (601, 602) durchführt, wobei der durch die Vektorkorrelation (602) erzeugte Messwert $\theta_2$ mit dem Messwert $\theta_1$ kombiniert (603) wird, der in Schritt (403) des Ermitteins des Ankunftspeilwinkels der Welle in Abhängigkeit von der Phasenverschiebung $\Delta\varphi$ und vom Verhältnis R erzeugt wird, wobei die Vektorkorrelation eine Kalibrationsphase (601) zum Erfassen und Aufzeichnen der Messungen durch die Antenne eines in Bezug auf die Peilung variierenden Kalibrationssignals und mit einer festen oder variablen Frequenz beinhaltet, und eine Phase (602) zum Messen von erfassten Signalen, wobei die Messphase wenigstens die folgenden Schritte beinhaltet:

○ Erfassen der auf wenigstens einem Frequenzkanal erkannten Signale;

○ Korrelieren, für jeden Frequenzkanal $f_i$, der erfassten Signale mit den Aufzeichnungen, die von der Frequenzkalibrierung nahe $f_i$ kommen, und Ermitteln der Ankunftsrichtung der Signale durch Suchen des Peilwinkels θ, für den die maximale Korrelation erzielt wird.

6. Winkelmessverfahren nach Anspruch 5, **dadurch gekennzeichnet, dass** während der Kalibrationsphase jede Erfassung in einer Tabelle in Form eines Interkorrelationsvektors aufgezeichnet wird, wobei die Vektoren der Tabelle nachfolgend mit einem anderen Interkorrelationsvektor korreliert werden, der von während der Messphase (102) erfassten Signalen kommt, wobei jeder der Interkorrelationsvektoren durch Ausführen wenigstens der folgenden Schritte berechnet wird:

○ Erfassen, wenigstens auf dem Sinus-Rahmen und dem Kosinus-Rahmen der Antenne, von N Signalmesswerten, N ≥1, über eine Dauer $\Delta t$;

○ Berechnen, für p Messungen unter den N zuvor vollendeten Messungen, eines elementaren Interkorrelationsvektors $X_k$;

○ Berechnen eines mittleren Interkorrelationsvektors X durch Mitteln der p zuvor berechneten elementaren Interkorrelationsvektoren $X_k$.

7. Winkelmessverfahren nach Anspruch 6, **dadurch gekennzeichnet, dass** ein von einer Messung k kommender elementarer Korrelationsvektor $X_k$ Folgendem entspricht:

$$X_k = \frac{1}{\|X_{0,k}\|^2} \cdot \begin{pmatrix} X_{0,k}.X_{0,k}^H \\ X_{0,k}.X_{c,k}^H \\ X_{0,k}.X_{s,k}^H \end{pmatrix},$$

wobei $X_{0,k}$ die auf dem Monopol erfasste komplexe Messung ist, $X_{c,k}$ die auf dem Kosinus-Rahmen erfasste komplexe Messung ist, $X_{s,k}$ die auf dem Sinus-Rahmen erfasste komplexe Messung ist, $^H$ der hermetische Operator ist.

8. Goniometer, das eine Kreuzrahmenantenne oder ein Antennenfeld des Adcock-Typs umfasst, **dadurch gekennzeichnet, dass** es ein Winkelmessverfahren nach einem der vorherigen Ansprüche durchführt.

9. Anwendung des Winkelmessverfahrens nach einem der Ansprüche 1 bis 7 auf einem Schiff oder einer Seeplattform, wobei die Antenne an dem Schiff oder der Plattform befestigt ist, wobei mit dem Verfahren Sender angepeilt werden, die sich auf schwimmenden Schiffen befinden, die sich innerhalb eines Radius von mehreren hundert Kilometern von dem Schiff oder der Plattform bewegen.

FIG.1a

FIG.1b

FIG.2a

FIG.2b

FIG.3a

FIG.3b

401

402

403

θ

FIG.4

401

402

403

θ

504

τ

FIG.5

401

402

403

601

θ₁

602

θ₂

603

θ

FIG.6

# FIG.7

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- GB 1144206 A